# EUROPÄISCHE PATENTSCHRIFT

(11) **EP 0 881 398 B1**
(45) Veröffentlichungstag und Bekanntmachung des Hinweises auf die Patenterteilung: **02.04.2003**
(21) Anmeldenummer: 98107110.3
(22) Anmeldetag: 18.04.1998
(51) Int. Cl.: F16B 5/02

(54) **Verschraubungsanordnung für Bauteile aus stark kriechendem Werkstoff**
Screw fitting for components made of high creep material
Raccord fileté pour composants en matière à basse résistance au fluage

(30) Priorität: 26.05.1997 DE 19721894
(43) Veröffentlichungstag der Anmeldung: 02.12.1998
(73) Patentinhaber: Volkswagen Aktiengesellschaft, 38436 Wolfsburg (DE)
(72) Erfinder: Ahrens, Gerald, 38165 Lehre (DE)

(56) Entgegenhaltungen:
- GB-A- 2 005 371
- DATABASE WPI Section Ch, Week 8504 Derwent Publications Ltd., London, GB; Class M11, AN 85-021931 XP002076031 & JP 59 217 009 A (HONDA MOTOR IND CO LTD)
- PATENT ABSTRACTS OF JAPAN vol. 017, no. 492 (C-1107), 7.September 1993 & JP 05 125567 A (NIPPON LIGHT METAL CO LTD;OTHERS: 01), 21.Mai 1993,

## Beschreibung

Die Erfindung betrifft eine Verschraubungsanordnung für Bauteile aus stark kriechendem Werkstoff, wobei am Bauteil an entsprechenden Verschraubungspunkten Bohrungen zum Eingriff von Schrauben in eine Bohrungswandung vorgesehen sind.

Mit dem zunehmendem Verlangen von aktiver und passiver Sicherheit bei Kraftfahrzeugen sind die Fahrzeuggewichte mehr und mehr gestiegen. Um die Fahrleistung trotz steigenden Gewichts bei zu behalten wurden immer leistungsstärkere Motoren verwendet. Dies führt jedoch zu einem unerwünscht höheren Kraftstoffverbrauch. Aus diesem Grund weisen neue Zielrichtungen im Automobilbau auf eine Reduzierung der Leergewichte von Kraftfahrzeugen, d. h. der Leichtbau gewinnt immer mehr Bedeutung.

Ein Ansatz zur Gewichtsreduzierung liegt in der neuerlichen Verwendung von Magnesium beispielsweise als Getriebegehäusewerkstoff statt dem bisher verwendeten Aluminium. Dabei kommen beispielsweise hochreine Magnesiumlegierungen wie AS21-HP (HP-high purety) oder bevorzugt AZ91-HP statt einer Aluminiumlegierung, wie beispielsweise Si₉Cu₃, zum Einsatz. Während die Aluminiumlegierung eine Dichte von etwa 2,74 Kg/dm³ aufweist, hat die Magnesiumlegierung AZ91-HP eine Dichte von 1,81 Kg/dm³. Die sich daraus theoretisch ergebende Gewichtsreduzierung von 34% wird in der Praxis häufig mit Werten von 13% bis 27% erreicht.

Besondere Probleme ergeben sich bei Schraubbefestigungen von Fahrzeugbauteilen aus Magnesiumlegierungen hinsichtlich des Wärmeausdehnungskoeffizienten, des Setzverhaltens und der Korrosionsproblematik von Magnesium.

Zur Lösung dieser Probleme wurden bisher beispielsweise Stahlschrauben mit korrosionshemmender Spezialoberfläche vorgeschlagen. Diese sind jedoch teuer und bei großen Wärmeschwankungen kommt es verstärkt zu hohen Belastungen der Schraubverbindung, was zu einem Setzen und letztlich zu einer Schraubenlockerung führt.

Daher wurden auch Stahldehnschrauben mit korrosionshemmender Spezialoberfläche eingesetzt, welche bei geeigneter Auslegung Wärmesetzerscheinungen minimieren können.

Eine dem Oberbegriff des Anspruchs 1 entsprechende Verschraubungsanordnung, die Teile aus einer Aluminiumlegierung zwischen Stahlschraube und Magnesiumbauteil vorsieht, ist aus dem japanischen Patent JP 05 125 567 A bekannt.
Dies ist jedoch teuer und es muß zusätzlicher Bauraum zur Verfügung stehen.

Weitere bekannte Lösungsvorschläge betreffen Aluminiumschrauben oder Aluminiumdehnschrauben. Diese sind jedoch ebenfalls teuer, müssen größer dimensioniert werden als herkömmliche Schrauben und es gibt derzeit wenig Erfahrung mit derartigen Alu-Verschraubungen.

Der vorliegenden Erfindung liegt daher die Aufgabe zugrunde, eine verbesserte Verschraubungsanordnung für Bauteile aus stark kriechendem Werkstoff der obengenannten Art zur Verfügung zu stellen, wobei die obengenannten Nachteile überwunden werden.

Diese Aufgabe wird erfindungsgemäß durch eine Verschraubungsanordnung der o. g. Art mit den in Anspruch 1 gekennzeichneten Merkmalen gelöst.

Dazu ist es erfindungsgemäß vorgesehen, daß in den Bohrungen jeweils eine Aluminiumbuchse vorgesehen ist, welche die Bohrungswandung und wenigstens einen vorbestimmten Bereich des Bauteils um die jeweilige Bohrung herum auf wenigstens einer Seite der Bohrung bedeckt, wobei der Überdeckungsbereich eine im wesentlichen rechtwinklig zur Achse der Bohrung ausgebildete Berührungsfläche aufweist.

Dies hat den Vorteil, daß sich die Verschraubung wie eine Aluminiumverschraubung darstellt, bei der konventionelle Stahlschrauben verwendet werden können. Diese Schraubverbindung ist kostengünstig, wobei gleichzeitig Korrosionsprobleme durch Kontaktkorrosion zwischen Bauteil und Stahlschraube wirksam vermieden sind. Es ist an den Stahlschrauben kein Spezial-Magnesium-Korrosionsschutz erforderlich und es sind auch kurze Schrauben einsetzbar, so daß die erfindungsgemäße Verschraubung keinen außergewöhnlich großen Bauraum benötigt. Ferner ist der Einsatz von Dehnschrauben entbehrlich, was zusätzliche Kostenvorteile erbringt.

Dadurch, daß die Aluminiumbuchse mit dem Bauteil vernietet ist, erzielt man einen sicheren Halt der Buchse und bildet gleichzeitig auf einfache Weise beidseitig der Bohrung einen Anschlag für einen Schraubenkopf um die Bohrung herum aus.

In einer besonders vorteilhaften Ausführungsform ist das Bauteil aus stark kriechendem Werkstoff ein Magnesiumbauteil.

Ein sicherer Verbund zwischen Buchse und Bauteil auch bei extremen Temperaturbelastungen und ein Anschlag für einen Schraubenkopf, ohne daß dieser mit dem Werkstoff des Bauteiles in Berührung kommt, wird dadurch erzielt, daß die Aluminiumbuchse an beiden Seiten der Bohrung einen vorbestimmten Bereich einer Bauteiloberfläche um die jeweilige Bohrung herum bedeckt.

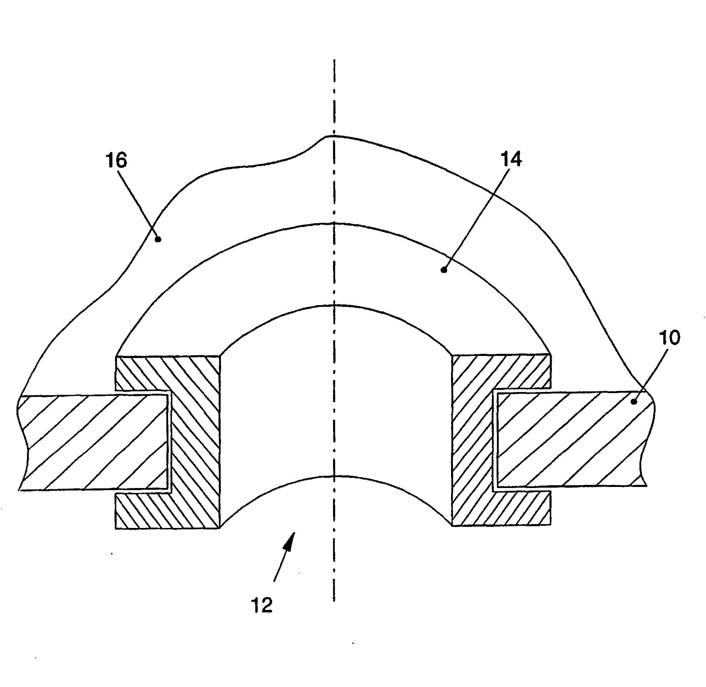

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt eine vorteilhafte Ausführungsform einer erfindungsgemäßen Verschraubungsanordnung in Schnittansicht.

In einem Magnesiumbauteil 10 ist an einem Befestigungspunkt eine Bohrung 12 vorgesehen. In der Bohrung 12 ist jeweils eine Aluminiumbuchse 14 angeordnet, welche die Bohrungswandungen vollständig und zusätzlich einen vorbestimmten Bereich auf einer Oberfläche 16 des Bauteiles um die Bohrung herum bedeckt. In der dargestellten Ausführungsform ist die Buchse 14 vernietet, was automatisch eine entsprechende Überdeckung um die Bohrung herum ausbildet. Gleichzeitig sorgen diese Überdeckungen für einen entsprechenden Halt der Buchse 14 in der Bohrung 12. Das Bauteil 10 ist beispielsweise ein Getriebegehäuse eines Kraftfahrzeuges.

Verschraubungskräfte werden somit im wesentlichen von der Aluminiumbuchse 14 aufgenommen, so daß das Magnesiumbauteil 10 nur geringe Setzneigung aufweist. Magnesium und Aluminium haben ähnliche Wärmeausdehnungskoeffizienten, wodurch nur geringe Wärmespannungen und somit nur geringe Flächenbelastungen auftreten. Dies wirkt sich äußerst positiv auf das Setzverhalten aus.

Es ist ersichtlich, daß die Erfindung nicht auf Magnesiumbauteile beschränkt, sondern zur Verschraubung jeglicher Bauteile mit starkem Kriechverhalten angewendet werden kann. Auch kann für die Buchse 14 ein anderes entsprechend geeignetes Material statt Aluminium verwendet werden. Hierbei ist die Werkstoffwahl in erster Linie davon beeinflußt, daß zwischen Buchse und Bauteil ein möglichst ähnlicher Wärmeausdehnungskoeffizient vorliegen soll, so daß nur geringe Wärmespannungen und somit geringe Flächenbelastungen auftreten und ein Setzten wirksam vermieden ist.

### BEZUGSZEICHENLISTE

- 10: Magnesiumbauteil
- 12: Bohrung
- 14: Buchse
- 16: Oberfläche des Bauteiles

## Patentansprüche

1. Verschraubungsanordnung für Bauteile (10) aus stark kriechendem Werkstoff, insbesondere eines Kraftfahrzeuges, wobei am Bauteil (10) an entsprechenden Verschraubungspunkten Bohrungen (12) zum Eingriff von Schrauben in eine Bohrungswandung vorgesehen sind, und wobei in den Bohrungen (12) jeweils eine Buchse (14) vorgesehen ist, welche die Bohrungswandung und wenigstens einen vorbestimmten Bereich des Bauteils (10) um die jeweilige Bohrung (12) herum auf wenigstens einer Seite der Bohrung (12) bedeckt, **dadurch gekennzeichnet, daß** der Überdeckungsbereich eine im wesentlichen rechtwinklig zur Achse der Bohrung (12) ausgebildete Berührungsfläche aufweist.

2. Verschraubungsanordnung nach Anspruch 1,
**dadurch gekennzeichnet, daß**
die Buchse (14) eine Aluminiumbuchse ist.

3. Verschraubungsanordnung nach Anspruch 1 oder 2,
**dadurch gekennzeichnet, daß**
die Buchsen (14) mit dem Bauteil (10) vernietet sind.

4. Verschraubungsanordnung nach einem der Ansprüche 1 bis 3,
**dadurch gekennzeichnet, daß**
das Bauteil (10) aus stark kriechendem Werkstoff ein Magnesiumbauteil ist.

5. Verschraubungsanordnung nach einem der Ansprüche 1 bis 4,
**dadurch gekennzeichnet, daß**
die Buchse (14) an beiden Seiten der Bohrung (12) einen vorbestimmten Bereich einer Bauteiloberfläche (16) um die jeweilige Bohrung (12) herum bedeckt.

## Claims

1. Screw fitting for components (10) made of high creep material, in particular of a vehicle, holes (12) being provided at appropriate screw-fitting points on the component (10) for the engagement of screws in a wall of the hole, and in each case a bush (14) being provided in the holes (12), covering the wall of the hole and at least one predetermined area of the component (10) around the respective hole (12) on at least one side of the hole (12), **characterized in that** the covering area has a contact surface formed substantially at right angles to the axis of the hole (12).

2. Screw fitting according to Claim 1, **characterized in that** the bush (14) is an aluminium bush.

3. Screw fitting according to Claim 1 or 2, **characterized in that** the bushes (14) are riveted to the component (10).

4. Screw fitting according to one of Claims 1 to 3, **characterized in that** the component (10) made of high creep material is a magnesium component.

5. Screw fitting according to one of Claims 1 to 4, **characterized in that**, on both sides of the hole (12), the bush (14) covers a predetermined area of a component surface (16) around the respective hole (12).

## Revendications

1. Raccord fileté pour composants (10) en matériau à basse résistance au fluage, en particulier pour un véhicule automobile, dans lequel des alésages (12) sont prévus sur le composant (10) en des points de vissage correspondants, en vue de l'engagement de vis dans une paroi de l'alésage, et dans lequel une douille (14) est prévue à chaque fois dans les alésages (12), laquelle recouvre la paroi de l'alésage et au moins une partie prédéterminée du composant (10) autour de l'alésage respectif (12) sur au moins un côté de l'alésage (12), **caractérisé en ce que** la zone de recouvrement présente une surface de contact réalisée essentiellement perpendiculairement à l'axe de l'alésage (12).

2. Raccord fileté selon la revendication 1, **caractérisé en ce que** la douille (14) est une douille en aluminium.

3. Raccord fileté selon la revendication 1 ou 2, **caractérisé en ce que** les douilles (14) sont rivetées au composant (10).

4. Raccord fileté selon l'une quelconque des revendications 1 à 3, **caractérisé en ce que** le composant (10) en matériau à basse résistance au fluage est un composant en magnésium.

5. Raccord fileté selon l'une quelconque des revendications 1 à 4, **caractérisé en ce que** la douille (14) recouvre des deux côtés de l'alésage (12) une zone prédéterminée d'une surface du composant (16) autour de l'alésage respectif (12).
